# FASCICULE DE BREVET EUROPEEN

(11) **EP 2 957 549 B1**
(45) Date de publication et mention de la délivrance du brevet: **08.08.2018**
(21) Numéro de dépôt: 14305960.8
(22) Date de dépôt: 20.06.2014
(51) Int. Cl.: A01G 24/23

(54) **Support de culture présentant une disponibilité en eau comparable à une tourbe**
Kultursubstrat mit einer Wasserverfügbarkeit, die mit Torf vergleichbar ist
Culture medium having a water availability comparable to a peat

(43) Date de publication de la demande: 23.12.2015
(73) Titulaire: Florentaise, 44850 St Mars Du Desert (FR)
(72) Inventeur: Tournayre, Laurent, 07200 Aubenas (FR); Beaudet, Eric, 49170 Savennieres (FR)
(74) Mandataire: Gilbey, Vincent

(56) Documents cités:
- EP-A1- 0 147 349
- EP-A2- 0 923 854
- WO-A1-2013/057402
- WO-A2-91/14358
- WO-A2-2012/047416
- FR-A1- 2 900 923

## Description

### DOMAINE TECHNIQUE GENERAL

La présente invention concerne la fabrication de substrats de culture présentant des propriétés et notamment une disponibilité en eau similaire à celle de la tourbe.

### ETAT DE L'ART

Parmi les supports de culture ou les composants de supports de culture, les tourbes sont très appréciées du fait de leur disponibilité en eau élevée, qui traduit l'eau pouvant être stockée par un substrat et extraite facilement par les racines de la plupart des plantes horticoles courantes. Ceci peut aussi être dénommé sous les termes de réserve utile ou de réserve facilement utilisable.

Cependant, les tourbes présentent des contraintes importantes. En effet, les tourbes sont des matières organiques issues de zones humides, fréquemment dans des zones sensibles et protégées. Les tourbes sont présentes uniquement dans certaines régions du monde, ce qui est problématique pour leur acheminement car elles nécessitent des transports sur de longues distances. Par ailleurs, leur processus de formation est très lent, et elles ne peuvent donc pas être considérées comme renouvelables. De plus, les procédés d'extraction utilisés communément libèrent d'importantes quantités de Carbone et de gaz à effet de serre.

Toutes ces contraintes impliquent que des matériaux de substitution aux tourbes sont recherchés depuis de nombreuses années, et en particulier des matériaux présentant une disponibilité en eau similaire à celle des tourbes. Parmi les nombreux matériaux ayant fait l'objet d'études, aucun n'atteint des disponibilités en eau comparables à celles de tourbes, par exemple comprises entre 250 et 400 mL par L de substrat.

La disponibilité en eau, exprimée en volume d'eau/volume de support de culture, correspond à l'eau libérée entre des potentiels matriciels de -1 kPa et -10 kPa ; la mesure est réalisée selon la méthodologie définie dans la norme EN 13041 avec une dépression de 10 cm et de 100 cm de hauteur d'eau.

Plusieurs procédés de traitement de plaquettes et de copeaux de bois ont ainsi été proposés afin d'obtenir de telles valeurs de disponibilité en eau, mais sans succès. En effet, bien que les substrats obtenus aient une rétention en eau relativement élevée, la disponibilité en eau demeure insuffisante, et d'autres propriétés telles sur la porosité et la teneur en air sont mises en avant.

Des substituts à base d'écorces broyées et tamisées ont également été proposés, afin d'exploiter les avantages des écorces par rapport au bois, à savoir une résistance plus importante à la dégradation biologique, et une rétention en eau plus importante. Les écorces sont ainsi généralement broyées et tamisées pour obtenir des fractions granulométriques comprises entre 0 et 40 mm, ce qui permet d'obtenir des capacités de drainage et d'aération intéressantes, mais demeure insuffisant en termes de disponibilité en eau.

Des broyages fins d'écorces ont été proposés, mais posent des problématiques en termes de maitrise et de reproduction de la granulométrie, et en termes de colmatages de la macroporosité du fait de la migration des particules les plus fines en cours de culture.

Le compostage des écorces permet d'améliorer la disponibilité en eau obtenue, sans toutefois permettre d'atteindre des valeurs proches de celles des tourbes. De plus, le compostage est un procédé présentant plusieurs inconvénients, parmi lesquels on peut citer une durée importante d'immobilisation du stock, des pertes de matières organiques, la non reproductibilité, et la nécessité d'infrastructures dédiées et entrainant un investissement important.

Le document FR 2 900 923 présente un procédé d'obtention d'un support de culture à partir d'écorce. Or, ce document présente l'obtention de caractéristiques intéressantes ; pH, pouvoir absorbant élevé, faible masse volumique apparente, mais qui sont communes à de nombreux matériaux utilisés pour la réalisation de supports de culture, et le procédé décrit dans ce document ne fait pas mention de l'obtention de valeurs de disponibilité en eau obtenues.
Le document WO2012/047416 présente un support de culture réalisé à base d'écorce.
Le document EP 0147349 présente un support de culture formé à partir de copeaux de bois.

### PRESENTATION DE L'INVENTION

La présente invention vise ainsi à proposer un support de culture présentant une disponibilité en eau comparable à celles des tourbes.

A cet effet, la présente invention propose un support de culture caractérisé en ce qu'il est réalisé par défibrage d'une composition à base d'écorce, ledit support de culture présentant une disponibilité en eau supérieure ou égale à 250 mL/L.

La composition à base d'écorce comprend 100% en volume d'écorce, et comprend:
- une fraction fine, correspondant aux particules inférieures à 100 µm, inférieure à 10%,
- une fraction moyenne, correspondant aux particules comprises entre 100 µm et 1000 µm, supérieure à 50%,
- une fraction grossière, correspondant aux particules comprises entre 1000 µm et 10000 µm, inférieure à 40%.

En variante,
- la fraction fine est inférieure à 5% ;
- la fraction moyenne est supérieure à 60% ;
- la fraction grossière est inférieure à 30%.

La composition à base d'écorce comprend au moins 80% en volume d'écorce.

Le volume restant de la composition à base d'écorce est typiquement du bois.

L'écorce est par exemple de l'écorce externe de plantes ligneuses.

L'invention concerne également un procédé de traitement d'une composition à base d'écorce, dans lequel on réalise un défibrage de la composition à base d'écorce pour la réalisation de supports de culture présentant une disponibilité en eau supérieure ou égale à 250 mL/L, dans lequel la composition à base d'écorce comprend 100% en volume d'écorce, et comprend :
- une fraction fine, correspondant aux particules inférieures à 100 µm, inférieure à 10%,
- une fraction moyenne, correspondant aux particules comprises entre 100µm et 1000µm, supérieure à 50%,
une fraction grossière, correspondant aux particules comprises entre 1000 µm et 10000 µm, inférieure à 40%.

L'écorce est par exemple de l'écorce externe de plantes ligneuses.

Le défibrage de la composition à base d'écorce est typiquement réalisé par élévation de température et compression, par exemple au moyen d'une machine à vis sans fin ou tout autre dispositif ou précédé.

Le procédé peut également comprendre une étape de broyage et de tamisage de la composition à base d'écorce, de manière à ce que la composition à base d'écorce à extruder présente une granulométrie de 25/40 mm.
En variante, la composition à extruder présente une granulométrie de 10/25 mm

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 illustre schématiquement un exemple de procédé selon un aspect de l'invention.
- Les figures 2 à 4 représentent un exemple d'installation permettant la mise en oeuvre d'un procédé selon un aspect de l'invention.

Sur l'ensemble des figures, les éléments en commun sont repérés par des références numériques identiques.

### DESCRIPTION DETAILLEE

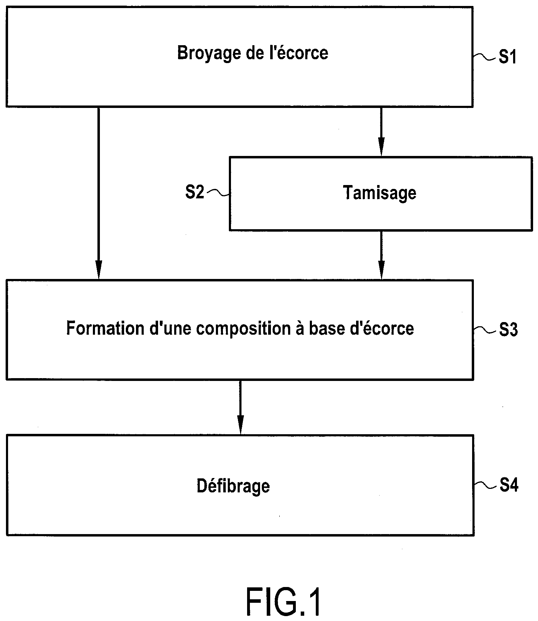

La figure 1 illustre schématiquement un exemple de procédé selon un aspect de l'invention.
Lors d'une première étape optionnelle S1, on réalise un broyage de l'écorce, typiquement de l'écorce de conifères.
Lors d'une deuxième étape optionnelle S2, on réalise un tamisage de l'écorce ainsi broyée, de manière à obtenir une écorce présentant une granulométrie déterminée. On cherche ainsi à obtenir une écorce comprenant des particules comprises entre 5 et 40 mm. L'écorce présente typiquement une granulométrie 25/40 mm, ou une granulométrie 10/25 mm. Cette deuxième étape optionnelle S2 peut être réalisée à la suite de la première étape optionnelle S1, et peut également être réalisée indépendamment de la première étape optionnelle S1.
Lors d'une troisième étape S3, on forme une composition à base d'écorce. La composition à base d'écorce est formée en regroupant de l'écorce, typiquement de l'écorce de conifères, qui est ensuite typiquement regroupée avec du bois, par exemple des copeaux ou des plaquettes de bois.
Selon un mode de réalisation ne faisant pas partie de l'invention revendiquée, l'écorce forme au moins 70% en volume de la composition à base d'écorce, ou par exemple au moins 80% en volume, ou encore plus précisément au moins 90% en volume de la composition à base d'écorce, ou encore au moins 95% en volume de la composition à base d'écorce. Le volume restant de la composition à base d'écorce est typiquement du bois. La composition à base d'écorce est constituée de 100 % d'écorce.
D'autres types d'écorces peuvent être utilisés. En fonction de la nature de l'écorce, par exemple dans le cas de l'écorce de feuillus, il peut être nécessaire de réaliser une étape préalable de traitement de la phyto-toxicité.

En variante, le broyage optionnel ainsi que le tamisage optionnel peuvent être réalisés après l'étape S3 de formation de la composition à base d'écorce.

Lors d'une quatrième étape S4, on réalise un défibrage de la composition à base d'écorce, par exemple par extrusion au moyen d'une machine, typiquement à vis sans fin, de manière à réaliser une compression et une élévation de la température de la composition à base d'écorce.
On présente ci-après un exemple de machine pouvant être utilisée pour réaliser ce défibrage, étant entendu que le défibrage peut être réalisé au moyen d'autres machines ou procédés.

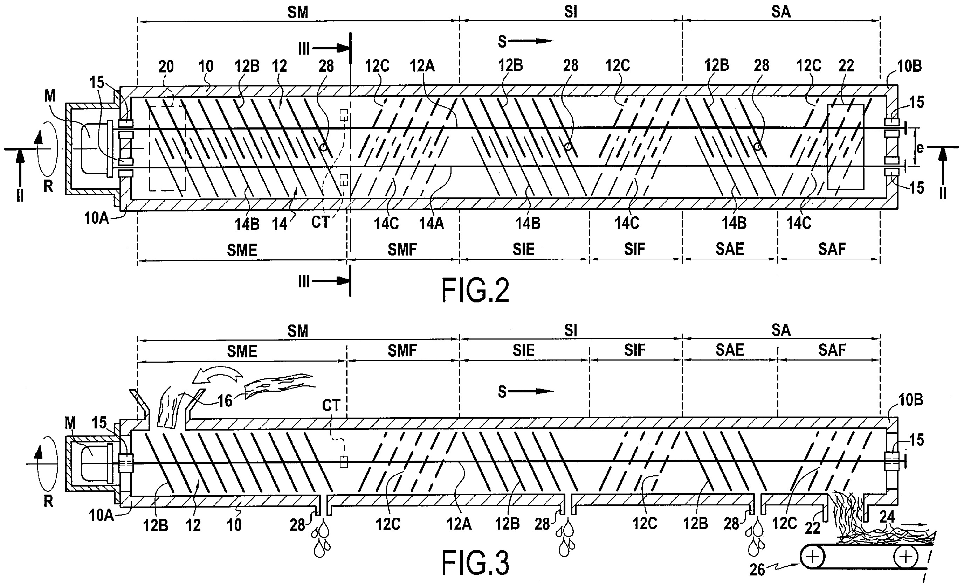

Les figures 2 à 4 représentent un exemple de machine permettant la mise en oeuvre d'un procédé selon un aspect de l'invention.
La figure 2 est une vue schématique de dessus d'une installation de défibrage permettant la mise en oeuvre du procédé de l'invention, dans laquelle la paroi du fourreau est coupée.
La figure 3 est une vue schématique correspondant à une vue de l'installation de la figure 1 en coupe dans le plan II-II de la figure 2, les parties de la vis 14 présente dans ce plan étant omises.

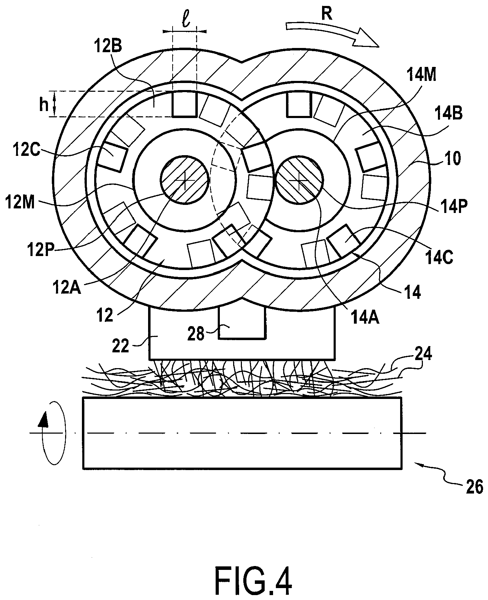

La figure 4 est une coupe selon la ligne III-III de la figure 2.

L'installation représentée sur les figures comprend un fourreau 10 dans lequel sont disposées deux vis 12, 14 engrenant l'une dans l'autre, formant ainsi une machine d'extrusion à vis sans fin. En effet, l'entraxe e entre les deux vis est inférieur au diamètre extérieur de leurs filets. Les arbres 12A et 14A des vis 12 et 14 sont entraînés en rotation par un moteur M et supportés en rotation par des paliers, tels que les paliers 15.

Comme on le voit mieux sur la figure 4, la paroi externe du fourreau a la forme de deux portions de cylindres sécantes adaptées, chacune, au diamètre des vis 12 et 14. Le fourreau présente, de préférence sur toute sa longueur, un capot ouvrant formant l'une de ses parois longitudinales pour permettre sa maintenance et son débourrage, si nécessaire.
La composition à base d'écorce 16 devant être défibrée, c'est-à-dire réduite en fibres, est chargée dans le fourreau par une alimentation 20, située à l'extrémité amont 10A du fourreau et ayant par exemple la forme d'une trémie située sur la face supérieure du fourreau, dans laquelle la composition à base d'écorce est acheminée par tout moyen approprié, par exemple par un convoyeur à vis, non représenté.
A son extrémité aval 10B, le fourreau présente une sortie 22. Il s'agit par exemple d'une goulotte située à la face inférieure du fourreau et laissant tomber les fibres 24 par gravité sur un convoyeur à bande 26. Ce convoyeur peut être équipé d'un tunnel (non représenté), ventilé par un gaz tel que de l'air, de préférence filtré, pour progressivement refroidir les fibres lors de leur convoyage.
L'ouverture de la paroi du fourreau formée à l'alimentation 20 est avantageusement symétrique par rapport au rapport au plan vertical médian entre les axes 12A et 12B des vis pour assurer la bonne répartition de la composition à base d'écorce sur les deux vis dès leur entrée dans le fourreau. De même, l'ouverture formée à la sortie 22 du fourreau est avantageusement symétrique par rapport au même plan vertical.
Du fait de la rotation des vis, la composition à base d'écorce est entraînée dans le sens S allant de l'amont vers l'aval.
Dans la paroi inférieure du fourreau sont disposés un ou plusieurs filtres d'extraction 28 servant à l'extraction des jus provenant du défibrage ou les eaux de lavage de la composition à base d'écorce, permettant ainsi de réguler l'humidité finale du produit. Par exemple, ces filtres sont placés à l'extrémité amont des zones de freinage qui seront décrites dans la suite. Les deux vis 12 et 14 tournent dans le même sens R et à la même vitesse de rotation. En effet, sur chaque tronçon des vis en vis-à-vis, les filets des deux vis sont de même sens.
Pour chaque vis, les filets présentent une série amont SM et une série aval SA de tronçons. En l'espèce, les filets présentent en outre une série intermédiaire SI située entre les série amont SM et aval SA. Ainsi, les séries SM, SI et SA sont disposées successivement depuis l'amont vers l'aval du fourreau.
Chacune de ces séries comprend elle-même une zone amont d'entraînement, respectivement SME, SIE et SAE pour les séries amont, intermédiaire et aval, ainsi qu'une zone aval de freinage, respectivement SMF, SIF et SAF pour les séries amont intermédiaire et aval. Ces zones d'entraînement et de freinage sont respectivement qualifiées de amont et de aval car, pour chaque série, la zone d'entraînement est en amont de la zone de freinage dans le sens S d'avancement de la composition à base d'écorce en cours de défibrage.
On voit que, dans les zones d'entraînement SME, SIE et SAE, les filets 12B et 14B des vis 12 et 14 sont à pas direct. Ceci signifie que, par la rotation des vis dans le sens R, ces filets font naturellement avancer vers l'aval le matériau qui est situé entre eux. En revanche, dans les zones de freinage SMF, SIF et SAF, les filets 12B et 14B sont à pas inverse, c'est-à-dire que la rotation des vis dans le sens R tend à faire reculer vers l'amont la composition à base d'écorce située entre eux.
Il en résulte que, pour chaque série, la composition à base d'écorce en cours de défibrage a tendance à s'agglutiner à l'interface entre la zone d'entraînement et la zone de freinage. Pour permettre quand même l'acheminement de la composition à base d'écorce vers l'aval à travers chaque zone de freinage, les filets des zones de freinage présentent des interruptions ou encoches 12C, 14C. Ainsi, ces encoches forment des zones d'étranglement à travers lesquelles la composition à base d'écorce est forcée à passer, sous l'effet de la poussée exercée, à l'amont, par la composition à base d'écorce entraînée vers l'aval par la zone d'entraînement amont. La composition à base d'écorce subit une élévation de température en raison de la pression exercée au sein de l'extrudeur, pouvant notamment être régulée par le nombre et les dimensions des encoches des zones de freinage. Par l'effet de l'augmentation de la température, de la pression et des frottements, l'écorce se désagrège pour ne conserver que les structures primaires la constituant, réalisant ainsi le défribrage.
Les encoches sont mieux visibles sur la figure 4 qui est une coupe verticale prise immédiatement à l'amont d'une zone de freinage (en l'espèce, la zone de freinage de la série amont SM) et montre l'organisation d'une zone de freinage. En l'espèce, pour la zone de freinage de chacune des deux vis 12 et 14, chaque filet comporte 5 encoches identiques, respectivement 12C et 14C réparties régulièrement angulairement.
Les axes géométriques des vis sont matérialisés par les références 12A et 14A, qui sont les axes de rotation de leurs arbres porteurs, respectivement 12P et 14P. Les tronçons de vis étant avantageusement démontables, leurs filets sont portés par des manchons, respectivement 12M et 14M, qui sont montés sur les arbres porteurs et leur sont solidarisés en rotation par tout moyen approprié, par exemple par des cannelures axiales (non représentées).
Pour chaque filet, les encoches sont délimitées radialement entre la périphérie radiale externe du filet et sa périphérie radiale interne, délimitée par la surface extérieure du manchon, respectivement 12M et 14M. Par exemple, le diamètre externe de chaque vis, délimité par la périphérie radiale externe de son filet, est de 240 mm, la hauteur radiale h d'une encoche est de 44mm et la largeur d'une encoche est de 16 mm. Pour un filet, c'est-à-dire en suivant un filet de la vis sur un angle de 360°, on parvient ainsi à une somme des sections des encoches de ce filet de 5 x 44 x 16 = 3520 mm².

Avantageusement, dans une zone de freinage de la vis 12 ou 14, les encoches 12C ou 14C de deux filets consécutifs de la même vis sont légèrement décalées angulairement. Pour illustrer cette caractéristique sur la figure 3, on a représenté en traits épais les encoches des filets qui sont situés en premier à partir du plan de coupe, tandis qu'on a montré en trait fin la position des encoches qui équipent les filets situés immédiatement à l'aval de ces premiers filets. En l'espèce, le décalage angulaire est de l'ordre de 10 à 20 degrés et il est orienté dans le sens de rotation R des vis, de sorte qu'une ligne reliant deux encoches correspondantes de deux filets adjacents est orientée dans le même sens que les filets à pas direct. L'alimentation de l'installation est réalisée en continu et le débit d'alimentation est réglé pour respecter des paramètres de pression et de température.
Ainsi, l'installation comprend avantageusement au moins un capteur de température CT situé à l'amont de la zone aval de freinage SMF de la série amont (dans la région du plan de coupe III-III). Une table de correspondance entre la température et la pression peut être établie. Ainsi, une élévation de la température révélée par le capteur de température CT peut révéler un risque d'élévation de pression trop important. Dans ce cas, l'installation peut être régulée en diminuant le débit d'alimentation en composition à base d'écorce. On peut également prévoir une mesure directe de la pression à l'aide d'un capteur de pression CP situé dans la même région que le capteur de température CT. Les mesures de ces capteurs (au moins celle du capteur de température CT) peuvent être fournies en entrée à un microprocesseur qui fournit une commande au système d'alimentation en composition à base d'écorce, par exemple une vis sans fin, comme indiqué précédemment. Si aucune mesure directe de pression n'est disponible, le microprocesseur peut, en mémoire, disposer d'une table de correspondance température/pression. Si une mesure directe de la pression est effectuée, le microprocesseur peut contrôler le système d'alimentation en composition à base d'écorce sur la base des deux données température/pression qui lui sont fournies. Pour une composition à base d'écorce déterminée et une humidité connue, il peut être établi une relation entre d'un part, les paramètres de pression et de température et, d'autre part, la puissance électrique consommée par le moteur qui entraîne les vis en rotation (ou l'intensité électrique délivrée, si la tension électrique est constante, comme c'est souvent le cas). Cette relation peut être déterminée de manière empirique par des essais. Cette relation étant connue, on peut obtenir les paramètres de pression et de température souhaités en réglant l'alimentation en composition à base d'écorce de manière à consommer une puissance cible.

La demanderesse a constaté que les paramètres de durée de séjour/pression/température sont optimisés si on gère l'alimentation de la machine en composition à base d'écorce de manière à obtenir un débit de fibres en sortie tel que, connaissant la section totale des encoches de chaque filet de la série aval SA, le rapport R_{sd} reste dans la plage de 65 à 85 mm²/m³h⁻¹, de préférence entre 75 et 85 mm²/M³h⁻¹. On a également constaté que le défibrage de l'écorce nécessite moins d'énergie que le défibrage du bois. A titre d'exemple, le défibrage d'écorce nécessite de l'ordre de 80 kWh/T tandis que le défibrage de bois nécessite de l'ordre de 120 kWh/T.
Bien entendu, les réglages de l'installation et du procédé pourront être affinés en fonction de la composition à base d'écorce défibrée.
On a décrit ci-dessus une installation comprenant deux vis parallèles tournant dans le même sens et à la même vitesse dans le fourreau. On pourrait utiliser un nombre différent de vis parallèles, par exemple 4.

Plusieurs essais ont été réalisés avec différentes compositions à base d'écorce, que l'on détaille ci-après à titre d'exemples non limitatifs.

En guise de valeur de référence, on considère la disponibilité en eau de la tourbe blonde qui est de 375 mL/L, et de la tourbe noire qui est de 282 mL/L.

### Essais avec une composition à base de pin sylvestre (Pinus sylvestris).

L'extrusion au moyen d'une machine à vis sans fin d'une composition comprenant 100% d'écorce de pin sylvestre de calibre 10/25mm a permis d'obtenir une disponibilité en eau de 369,1 mL/L, soit une disponibilité en eau sensiblement égale à celle de la tourbe blonde.
L'extrusion au moyen d'une machine à vis sans fin d'une composition comprenant 90% en volume d'écorce de pin sylvestre de calibre 10/25 mm et 10% en volume de plaquettes de bois a permis d'obtenir une disponibilité en eau de 256,1 mL/L, soit une disponibilité en eau comparable à celle de la tourbe noire.

### Essais avec une composition à base de pin maritime (Pinus pinaster) et de pin noir (Pinus nigra).

L'extrusion au moyen d'une machine à vis sans fin d'une composition comprenant 100% d'écorce de pin maritime et de pin noir de calibre 10/25mm a permis d'obtenir une disponibilité en eau de 346 mL/L, soit une disponibilité en eau sensiblement égale à celle de la tourbe blonde.
L'extrusion au moyen d'une machine à vis sans fin d'une composition comprenant 80% en volume d'écorce de pin maritime et de pin noir de calibre 10/25 mm et 20% en volume de plaquettes de bois a permis d'obtenir une disponibilité en eau de 277 mL/L, soit une disponibilité en eau comparable à celle de la tourbe noire. L'extrusion au moyen d'une machine à vis sans fin d'une composition comprenant 70% en volume d'écorce de Pin maritime et de Pin noir de calibre 10/25 mm et de 30% en volume de plaquettes de bois de pin a permis d'obtenir une disponibilité en eau de 243 mL/L, soit une disponibilité en eau sensiblement égale à celle de la tourbe noire.

Le procédé présenté permet ainsi d'obtenir un support de culture présentant une disponibilité en eau comparable à celle de la tourbe, c'est-à-dire supérieure ou égale à 250 mL/L, ce que ne permettaient pas de réaliser les procédés connus.
En variante, le procédé peut être utilisé pour obtenir une disponibilité en eau supérieure ou égale à 240 mL/L, 260 mL/L, 270 mL/L, 280 mL/L, 290 mL/L, 300 mL/L, 310 mL/L, 320 mL/L, 330 mL/L, 340 mL/L, 350 mL/L, 360 mL/L, 370 mL/L ou encore 375 mL/L.

L'obtention d'une meilleure disponibilité en eau par rapport aux procédés connus réalisant un défibrage de bois peut notamment être expliquée du fait de la différence de structure entre l'écorce et le bois qui est constatée lors d'une analyse granulométrique.

La table 1 ci-après présente les résultats d'une analyse granulométrique de fibres issues d'un procédé de défibrage d'écorce d'une part, et de bois d'autre part.

Comme on le voit dans cette table, pour les fibres obtenues par défibrage d'écorce, les particules sont concentrées entre 100 et 1000 µm, cette gamme de valeurs représentant environ 65% des fibres. Il y a peu de fraction grossière, supérieure à 1000 µm. Or, c'est cette fraction grossière qui est peu propice à la rétention en eau, et qui est très présente dans le cas de fibres obtenues par défibrage de bois.
Dans le cas des fibres obtenues par défibrage d'écorce, la fraction fine, correspondant aux fibres inférieures à 100 µm est réduite, ici inférieure à 5%. Or, c'est cette fraction qui peut entrainer des colmatages de la porosité et une modification des caractéristiques sur la durée. Une fraction fine peu représentée telle qu'obtenue par défibrage d'écorce est donc avantageuse.

**Table 1**

| % de refus à x µm | Ecorce | Bois |
|---|---|---|
| 0 | 2,0% | 11,2% |
| 100 | 8,5% | 4,0% |
| 160 | 188% | 5,8% |
| 315 | 14,9% | 5,5% |
| 500 | 7,9% | 4,5% |
| 630 | 14,2% | 9,9% |
| 1000 | 7,2% | 6,5% |
| 1250 | 13,4% | 23,2% |
| 2500 | 9,6% | 23,9% |
| 5000 | 3,5% | 5,5% |
| 10000 | 0,0% | 0,0% |

De manière générale, par défibrage d'une composition à base d'écorce comprenant 100% d'écorce, on obtient une granulométrie répartie comme suit :
- Une fraction fine, correspondant aux particules inférieures à 100 µm, inférieure à 10%, ou avantageusement inférieure à 5%.
- Une fraction moyenne, correspondant aux particules comprises entre 100 µm et 1000 µm, supérieure à 50%, ou avantageusement supérieure à 60%.
- Une fraction grossière, correspondant aux particules comprises entre 1000 µm et 10000 µm, inférieure à 40%, ou avantageusement inférieure à 30%.

La variation de la quantité de bois dans la composition à base d'écorce permet d'influer sur d'autres propriétés du support de culture obtenu. L'augmentation de la quantité de bois dans la composition à base d'écorce permet ainsi par exemple d'augmenter l'aération du support de culture obtenu. Par ailleurs, l'augmentation de la quantité de bois dans la composition à base d'écorce entraine une diminution progressive de la disponibilité en eau.
On peut donc, en faisant varier le volume d'écorce et de bois de la composition à base d'écorce, réaliser un support de culture présentant des propriétés de disponibilité en eau et d'aération voulues.

## Revendications

1. Support de culture **caractérisé en ce qu'**il est réalisé par défibrage d'une composition à base d'écorce, ledit support de culture présentant une disponibilité en eau supérieure ou égale à 250 mL/L dans lequel la composition à base d'écorce comprend 100% en volume d'écorce, et comprend :
- une fraction fine, correspondant aux particules inférieures à 100 µm, inférieure à 10%,
- une fraction moyenne, correspondant aux particules comprises entre 100µm et 1000µm, supérieure à 50%,
- une fraction grossière, correspondant aux particules comprises entre 1000 µm et 10000 µm, inférieure à 40%.

2. Support de culture selon la revendication 1, dans lequel l'écorce est de l'écorce externe de plantes ligneuses.

3. Support de culture selon l'une des revendications 1 ou 2, dans lequel :
- la fraction fine est inférieure à 5% ;
- la fraction moyenne est supérieure à 60% ;
- la fraction grossière est inférieure à 30%.

4. Procédé de traitement d'une composition à base d'écorce dans lequel on réalise un défibrage de la composition à base d'écorce pour la réalisation de supports de culture présentant une disponibilité en eau supérieure ou égale à 250 mL/L, dans lequel la composition à base d'écorce comprend 100% en volume d'écorce, et comprend :
- une fraction fine, correspondant aux particules inférieures à 100 µm, inférieure à 10%,
- une fraction moyenne, correspondant aux particules comprises entre 100µm et 1000µm, supérieure à 50%,
- une fraction grossière, correspondant aux particules comprises entre 1000 µm et 10000 µm, inférieure à 40%.

5. Procédé selon la revendication 4, dans lequel l'écorce est de l'écorce externe de plantes ligneuses.

6. Procédé selon l'une des revendications 4 ou 5, dans lequel le défibrage de la composition à base d'écorce est réalisé par élévation de température et compression.

7. Procédé selon la revendication 5, dans lequel l'élévation de température et la compression sont réalisées au moyen d'une machine à vis sans fin.

8. Procédé selon l'une des revendications 6 ou 7 comprenant une étape de broyage et de tamisage d'écorce, de manière à ce que la composition à base d'écorce extrudée présente une granulométrie de 25/40 mm.

9. Procédé selon la revendication 8, dans lequel que la composition extrudée présente une granulométrie de 10/25 mm.

## Patentansprüche

1. Zellkulturträger, **dadurch gekennzeichnet, dass** er durch Zerfasern einer Zusammensetzung auf Basis von Rinde hergestellt ist, wobei der Zellkulturträger eine Wasserverfügbarkeit von mehr als oder gleich 250 ml/l aufweist, wobei die Zusammensetzung auf Basis von Rinde 100 Volumenprozent Rinde umfasst, und umfasst:
- eine Feinfraktion, die Teilchen von weniger als 100 µm entspricht und weniger als 10 % beträgt,
- eine Mittelfraktion, die Teilchen zwischen 100 µm und 1000 µm entspricht und mehr als 50 % beträgt,
- eine Grobfraktion, die Teilchen zwischen 1000 µm und 10000 µm entspricht und weniger als 40 % beträgt.

2. Zellkulturträger gemäß Anspruch 1, wobei die Rinde äußere Rinde von Gehölzen ist.

3. Zellkulturträger gemäß einem der Ansprüche 1 oder 2, wobei:
- die Feinfraktion weniger als 5 % beträgt;
- die Mittelfraktion mehr als 60 % beträgt;
- die Grobfraktion weniger als 30 % beträgt.

4. Verfahren zur Behandlung einer Zusammensetzung auf Basis von Rinde, bei dem die Zusammensetzung auf Basis von Rinde zerfasert wird, um Zellkulturträger mit einer Wasserverfügbarkeit von mehr als oder gleich 250 ml/l herzustellen, wobei die Zusammensetzung auf Basis von Rinde 100 Volumenprozent Rinde umfasst, und umfasst:
- eine Feinfraktion, die Teilchen von weniger als 100 µm entspricht und weniger als 10 % beträgt,
- eine Mittelfraktion, die Teilchen zwischen 100 µm und 1000 µm entspricht und mehr als 50 % beträgt,
- eine Grobfraktion, die Teilchen zwischen 1000 µm und 10000 µm entspricht und weniger als 40 % beträgt.

5. Verfahren gemäß Anspruch 4, wobei die Rinde äußere Rinde von Gehölzen ist.

6. Verfahren gemäß einem der Ansprüche 4 oder 5, wobei die Zusammensetzung auf Basis von Rinde durch Erhöhen der Temperatur und Verdichten zerfasert wird.

7. Verfahren gemäß Anspruch 5, bei dem das Erhöhen der Temperatur und das Verdichten mittels einer Schneckenmaschine durchgeführt werden.

8. Verfahren gemäß einem der Ansprüche 6 oder 7, umfassend einen Schritt des Zermahlens und Siebens von Rinde, sodass die extrudierte Zusammensetzung auf Basis von Rinde eine Teilchengröße von 25/40 mm aufweist.

9. Verfahren gemäß Anspruch 8, wobei die extrudierte Zusammensetzung eine Teilchengröße von 10/25 mm aufweist.

## Claims

1. A cultivation medium **characterized in that** it is made by defibration of a bark-based composition said cultivation medium having water availability that is greater than or equal to 250 mL/L wherein the bark-based composition comprises 100% by volume of bark, and comprises:
- • a fine fraction, corresponding to particles smaller than 100 µm, that is less than 10%;
- • a medium fraction, corresponding to particles lying in the range 100 µm to 1000 µm, that is greater than 50%; and
- • a coarse fraction, corresponding to particles lying in the range 1000 µm to 10,000 µm, that is less than 40%.

2. A cultivation medium according to claim 1, wherein the bark is the outer bark from woody plants.

3. A cultivation medium according to any one of claims 1 or 2, wherein:
• the fine fraction is less than 5%;
• the medium fraction is greater than 60%; and
• the coarse fraction is less than 30%.

4. A method of treating a bark-based composition, wherein the bark-based composition is defibrated in order to make cultivation media having water availability that is greater than or equal to 250 mL/L, wherein said bark-based composition comprises 100% by volume of bark, and comprises:
- • a fine fraction, corresponding to particles smaller than 100 µm, that is less than 10%;
- • a medium fraction, corresponding to particles lying in the range 100 µm to 1000 µm, that is greater than 50%; and
- • a coarse fraction, corresponding to particles lying in the range 1000 µm to 10,000 µm, that is less than 40%.

5. A method according to claim 4, wherein the bark is the outer bark from woody plants.

6. A method according to any one of claims 4 or 5, wherein the bark-based composition is defibrated by raising temperature and compression.

7. A method according to claim 5, wherein the temperature and compression are increased by means of an auger machine.

8. A method according to claim 6 or claim 7 comprising a step of grinding and screening bark, in such a manner that the extruded bark-based composition has a particle size of 25 mm to 40 mm.

9. A method according to claim 8, wherein the extruded composition has a particle size of 10 mm to 25 mm.
